(19) Europäisches Patentamt
European Patent Office
Office européen des brevets

(11) **EP 4 610 663 A1**

(12) **EUROPÄISCHE PATENTANMELDUNG**

(43) Veröffentlichungstag:
**03.09.2025  Patentblatt 2025/36**

(21) Anmeldenummer: **25158447.0**

(22) Anmeldetag: **18.02.2025**

(51) Internationale Patentklassifikation (IPC):
**G01P 3/487** (2006.01)    **G01P 21/02** (2006.01)

(52) Gemeinsame Patentklassifikation (CPC):
**G01P 3/487; G01P 21/02**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **27.02.2024  DE 102024201783**

(71) Anmelder: **Robert Bosch GmbH**
**70442 Stuttgart (DE)**

(72) Erfinder: **Hau, Julian**
**72766 Reutingen (DE)**

(54) **VERFAHREN ZUM ERMITTELN EINER GESCHWINDIGKEIT EINES ZWEIRADS**

(57)    Die Erfindung betrifft ein Verfahren zum Ermitteln einer Geschwindigkeit ($v_P$) eines Zweirads (14) mittels einer Zweiradgeschwindigkeitsmessvorrichtung (10), umfassend einen am Rad (18) montierten Magneten (22), einen Magnetfeldsensor (30) zum Ermitteln eines Magnetfeldes (B) des Magneten (22) und eine Rechnereinheit (34). Das Verfahren umfasst dabei die Schritte des Ermittelns ($A_{Pv}$) des Magnetfeldes (B) eines Magnetpulses (42), des Ermittelns ($B_{Pv}$) einer Zeit ($\Delta t_{12}$, $\Delta t_{34}$) zwischen einem Minimum und einem Maximum eines einzigen Magnetpulses (42), und des Berechnens ($C_{Pv}$) der Geschwindigkeit ($v_P$) aus einem Quotienten aus einem ermittelten und in der Zweiradgeschwindigkeitsmessvorrichtung (10) hinterlegten Wert P und der Zeit ($\Delta t_{12}$, $\Delta t_{34}$) zwischen Minimum und Maximum. Die Ermittlung des Werts P umfasst dabei die Schritte des Ermittelns (AP) des Magnetfeldes (B) bei wenigstens zwei Magnetpulsen (42), Ermittelns (BP) der Zeit ($\Delta t12$, $\Delta t34$) zwischen einem Minimum und einem Maximum eines einzigen Magnetpulses (42), des Ermittelns (CP) der Radumlaufzeit ($\Delta t24$) zwischen gleichen Werten zweier aufeinander folgenden Magnetpulse (42), des Ermittelns (DP) der Geschwindigkeit (v) aus der Radumlaufzeit ($\Delta t24$) und einem Radumfang (U), des Berechnens (EP) eines Werts für P, aus einem Produkt aus Zeit ($\Delta t12$, $\Delta t34$) zwischen Minimum und Maximum und der Geschwindigkeit (v), und des Hinterlegens (FP) des Werts P.

Fig. 1

EP 4 610 663 A1

## Beschreibung

Die vorliegende Erfindung betrifft ein Verfahren zum Ermitteln einer Geschwindigkeit eines Zweirads. Darüber hinaus betrifft die Erfindung eine Zweiradgeschwindigkeitsmessvorrichtung, mit welcher ein solches Verfahren durchführbar ist und ein Zweirad umfassend eine solche Zweiradgeschwindigkeitsmessvorrichtung.

Stand der Technik

Zur berührungslosen Abstands- und Einbaulagenmessung von rotierenden Teilen werden sowohl optische als auch magnetische Sensoren verwendet. So erfolgt beispielsweise die Geschwindigkeitsmessung bei Fahrrädern während der Fahrt mittels magnetischer Raddrehzahlsensoren, bei dem die Drehung der Fahrradreifen erfasst wird. Dabei sind die Raddrehzahlsensoren als Magnetsensoren beispielsweise ortsfest an der Vorderradgabel vorgesehen, die bei jedem Durchlauf eines Magneten an der Speiche einen Impuls liefern. Aus dem zeitlichen Abstand zweier Impulse kann so auf die Drehgeschwindigkeit des Rads und mittels eines Umrechnungsfaktors auf die Geschwindigkeit des Fahrzeugs bzw. Fahrrads geschlossen werden.

Nachteilig bei einer derartigen Geschwindigkeitserfassung ist die notwendige Zeitdauer, da zumindest zwei Impulse registriert werden müssen. Bei sehr langsamen Drehbewegungen ist daher die Erfassung sehr ungenau. Weiterhin besteht bei dieser Form der Geschwindigkeitserfassung sehr leicht die Möglichkeit einer Manipulation.

Die DE 10 2017 212 924 A1 beschreibt ein Verfahren zur Erfassung der Drehgeschwindigkeit eines Rades eines Zweirads. Dazu wird mittels eines Magnetfeldsensors ein Magnetfeldsensorsignal eines an einem Rad angebrachten Magnet ermittelt. Anhand eines definierten Schwellwerts werden im Magnetfeldsensorsignal die Zeitpunkte beim Über- und Unterschreiten dieses Schwellwerts ermittelt. Aus einer sich aus den Zeitpunkten ergebenden Differenzzeit wird in einem nächsten Schritt eine Geschwindigkeit des Zweirads ermittelt. Darüber hinaus beschreibt der Stand der Technik ein Überprüfungsverfahren, mit welchem die Korrektheit der erfassten Geschwindigkeiten überprüft, und eine Auswerteeinheit, welche diese Verfahren durchführt.

Die der Erfindung zugrunde liegende Aufgabe liegt darin, ein Verfahren zum Ermitteln einer Geschwindigkeit eines Zweirads anzugeben, mit welchem eine schnellere und wirtschaftliche Ermittlung der Geschwindigkeit möglich ist.

Die Aufgabe wird gelöst durch ein Verfahren zum Ermitteln einer Geschwindigkeit eines Zweirads mit dem Gegenstand der Patentansprüche 1 oder 2. Darüber hinaus gibt die Erfindung eine Zweiradgeschwindigkeitsmessvorrichtung mit den Merkmalen von Anspruch 9 an. Zudem wir ein Zweirad mit den Merkmalen des Anspruch 10 beansprucht. Bevorzugte Ausführungsformen sind den abhängigen Ansprüchen zu entnehmen.

Offenbarung der Erfindung

Die Erfindung gibt ein Verfahren zum Ermitteln einer Geschwindigkeit, insbesondere Geschwindigkeit $v_P$, eines Zweirads mittels einer Zweiradgeschwindigkeitsmessvorrichtung an, wobei die Zweiradgeschwindigkeitsmessvorrichtung einen am Rad montierten Magneten, einen Magnetfeldsensor zum Ermitteln eines Magnetfeldes des Magneten und eine Rechnereinheit umfasst. Das Verfahren umfasst dabei die Schritte des Ermittelns des Magnetfeldes eines Magnetpulses, des Ermittelns einer Zeit zwischen einem Minimum und einem Maximum eines einzigen Magnetpulses, und des Berechnens der Geschwindigkeit aus einem Quotienten aus einem ermittelten und in der Zweiradgeschwindigkeitsmessvorrichtung hinterlegten Wert P und der Zeit zwischen Minimum und Maximum.

Der Begriff Zweirad umfasst alle zweirädrigen Fahrzeuge, wie beispielsweise Motorrad, Fahrrad, Pedelec und E-Roller. Unter einem einzigen Magnetpuls ist die Änderung des Magnetfeldes zu verstehen, welche ein einziges Passieren des Magneten am Magnetfeldsensor erzeugt. Bei einem einzigen Passieren des Magneten am Magnetfeldsensor ist sowohl ein minimaler Magnetfeldwert als auch ein maximaler Magnetfeldwert erzeugbar. Zwischen diesem Minimum und Maximum wird die Zeit gemessen, sodass bereits nach Erreichen des Maximums die Geschwindigkeit über den festen Wert P berechenbar ist. Die Geschwindigkeit des Zweirads wird dementsprechend weit vor Erreichen einer vollständigen Umdrehung des Rads ermittelt. Es ist somit möglich die Geschwindigkeit schneller zu Ermitteln. Zudem sind zur Messung der Geschwindigkeit keine zusätzlichen als die üblich verwendeten Bauteile notwendig. Das Verfahren kann somit wirtschaftlich ausgeführt werden.

Der Wert P ist ein für das Zweirad fester Wert, welcher von der Geschwindigkeit unabhängig ist. Entsprechend muss dieser Wert lediglich einmal ermittelt werden. Die Ermittlung des Werts P umfasst dabei die Schritte des Ermittelns des Magnetfeldes bei wenigstens zwei Magnetpulsen, des Ermittelns der Zeit zwischen einem Minimum und einem Maximum eines einzigen Magnetpulses, und des Ermittelns der Radumlaufzeit zwischen gleichen Werten zweier aufeinander folgenden Magnetpulse. In nächsten Schritten des Verfahrens wird die Geschwindigkeit aus der Radumlaufzeit und einem Radumfang ermittelt, ein Wert für P wird aus einem Produkt aus Zeit zwischen Minimum und Maximum und der Geschwindigkeit berechnet. Abschließend wird der Wert für P hinterlegt.

Vorteilhafterweise sind die Werte zum Ermitteln der Radumlaufzeit gleiche Extremwerte, wie das Minimum oder das Maximum. Ebenso ist es möglich, dass dieser Wert eine Nullstelle des Magnetpulses ist. Diese liegt zwischen dem Minimum und dem Maximum des Magnetfelds. Mit dem obigen Verfahren ist der Wert für P somit durch eine einfache Rechnung berechenbar. Zum Berechnen von dem Wert P muss somit lediglich einmal die Geschwindigkeit v auf herkömmlichem Weg bestimmt werden, sozusagen als Referenzgeschwindigkeit. Das Verfahren zum Berechnen von P ist somit einfach durchführbar.

Alternativ oder zusätzlich gibt die Erfindung ein weiteres Verfahren zum Ermitteln einer Geschwindigkeit, insbesondere Geschwindigkeit $v_R$, eines Zweirads mittels der Zweiradgeschwindigkeitsmessvorrichtung an. Das Verfahren umfasst dabei die Schritte des Ermittelns des Magnetfeldes eines Magnetpulses, des Ermittelns des Winkelverlaufs des Magnetfeldvektors eines einzigen Magnetpulses, des Ermittelns der Zeit zwischen einem Minimum und einem Maximum eines Magnetpulses, und des Ermittelns der Winkeldifferenz aus dem Winkelverlauf des Magnetfeldvektors zum Zeitpunkt des Minimums und des Maximums des Magnetpulses. Daraus wird anschließend eine Winkelgeschwindigkeit aus Winkeldifferenz und Zeit berechnet. In einem folgenden Schritt wird eine Geschwindigkeit aus einem Produkt einem in der Zweiradgeschwindigkeitsmessvorrichtung ermittelten und hinterlegten Wert R und der Winkelgeschwindigkeit berechnet.

Auch bei diesem Verfahren wird die Geschwindigkeit lange vor Erreichen einer vollständigen Umdrehung des Rads ermittelt. Somit ist es auch mit diesem Verfahren möglich die Geschwindigkeit schneller zu ermitteln. Die Geschwindigkeit kann dabei durch eine einfache Berechnung ermittelt werden. Auch bei diesem Verfahren werden keine zusätzlichen Bauteile benötigt, um dieses Verfahren durchzuführen. Entsprechend kann das Verfahren wirtschaftlich ausgeführt werden. Auch ist es möglich bereits bestehende Zweiräder mit einem solchen Verfahren zur Bestimmung der Geschwindigkeit nachzurüsten.

Der Wert R ist ein für das Zweirad fester Wert, welcher von der Geschwindigkeit unabhängig ist. Entsprechend muss dieser Wert lediglich einmal ermittelt werden. Die Ermittlung des Werts R umfasst dabei die Schritte des Ermittelns des Magnetfeldes bei wenigstens zwei Magnetpulsen, des Ermittelns des Winkelverlaufs des Magnetfeldvektors, und des Ermittelns der Zeit zwischen einem Minimum und einem Maximum eines einzigen Magnetpulses. Zusätzlich wird die Winkeldifferenz aus dem Winkelverlauf des Magnetfeldvektors zum Zeitpunkt des Minimums und des Maximums des Magnetpulses ermittelt, eine Winkelgeschwindigkeit aus der Winkeldifferenz und der Zeit zwischen einem Minimum und einem Maximum eines einzigen Magnetpulses berechnet, und die Radumlaufzeit zwischen gleichen Werten zweier aufeinander folgenden Magnetpulse ermittelt.

Aus diesen Werten wird anschließend die Geschwindigkeit aus der Radumlaufzeit und einem Radumfang berechnet, und ein Wert R aus einem Quotienten aus der Geschwindigkeit und Winkelgeschwindigkeit berechnet. Der Wert R wird anschließend hinterlegt. Auch hier ist der Wert R ein fester Wert, welcher von der Geschwindigkeit unabhängig ist. Dieser Wert muss somit ebenfalls lediglich einmal bestimmt werden. Zum Berechnen von dem Wert R muss somit lediglich einmal die Geschwindigkeit v, sozusagen als Referenzgeschwindigkeit, auf herkömmlichem Weg bestimmt werden. Das Verfahren zum Berechnen von R ist somit einfach durchführbar.

Die der Erfindung zugrunde liegende Aufgabe wird zusätzlich gelöst durch ein Verfahren zum Ermitteln einer Geschwindigkeit eines Zweirads, wobei die Geschwindigkeit über beide Verfahren ermittelt wird. Obwohl beide Verfahren zum Ermitteln der Geschwindigkeit auch einzeln verwendbar sind, können diese auch gleichzeitig angewendet werden. Die Berechnung der Geschwindigkeit kann über zwei verschiedene Verfahren noch genauer ermittelt werden. Darüber hinaus kann die korrekte Berechnung der Geschwindigkeit beider Verfahren miteinander abgeglichen werden.

In einer bevorzugten Ausführung der Erfindung wird der Wert P und/oder R bei einer konstanten Geschwindigkeit berechnet. Bei einer konstanten Geschwindigkeit ändert sich die Geschwindigkeit zwischen zwei Durchläufen des Magneten am Magnetfeldsensor nicht. Beschleunigungseffekte oder Bremseffekte, welche zu einem ungenauen Wert für P und/oder R führen, können dadurch eliminiert werden. Der Wert für P und R kann somit mit hoher Genauigkeit mittelt werden.

In einer weiteren bevorzugten Ausführung der Erfindung werden, die über den Wert P und den Wert R ermittelten Geschwindigkeiten $v_P$, $v_R$, miteinander verglichen, und falls die Geschwindigkeiten $v_P$, $v_R$ um einen vorgegebenen Grenzwert voneinander abweichen, die Geschwindigkeit v, insbesondere Referenzgeschwindigkeit, aus der Radumlaufzeit und dem Radumfang berechnet wird. Es wird somit eine Plausibilisierung der Geschwindigkeiten $v_P$, $v_R$ vorgenommen. Beide Berechnungsmethoden müssen dabei das gleiche Ergebnis ergeben.

Bei einer einen Grenzwert übersteigenden Abweichung kann davon ausgegangen werden, dass zumindest eine Berechnungsmethode fehlerhaft ist.

Ein solcher Fehler kann beispielsweise durch einen Defekt oder störende Einflüsse verursacht werden. Da nicht ermittelbar ist, welche dieser Berechnungsmethoden fehlerhaft ist, wird, um eine falsche Anzeige der Geschwindigkeit zu verhindern, die Geschwindigkeit nach dem herkömmlichen Weg berechnet, sozusagen als Geschwindigkeit v aus der Radumlaufzeit und dem Radumfang. Eine solche Plausibilisierung wäre beim Berechnen der Geschwindigkeit über lediglich eine Berechnungsmethode nicht möglich. Dadurch kann sichergestellt werden, dass dauerhaft die richtige Geschwindigkeit angezeigt wird.

Vorzugsweise wird ein Mittelwert zwischen der über den Wert P und den Wert R ermittelten Geschwindigkeit ermittelt, sozusagen ein Geschwindigkeitsmittelwert. Da sowohl der Wert P als auch der Wert R und auch die Berechnungsmethode mit Ungenauigkeiten behaftet sein kann, wird durch eine Berechnung eines Mittelwerts die Genauigkeit der Geschwindigkeit erhöht.

In einer vorteilhaften Weiterbildung werden die ermittelten Werte für P und/oder R kontinuierlich ermittelt und neu hinterlegt. Durch einen kontinuierliches hinterlegen dieser Werte kann verhindert werden, dass durch bauliche Maßnahmen an dem Zweirad sich eine Änderung dieser Werte ergibt, sodass eine Ermittlung auf Basis eines veralteten Wertes ungenau wäre. Somit kann dauerhaft eine genaue Ermittlung der Geschwindigkeit garantiert werden.

Besonders vorteilhafterweise wird für den Wert P und R ermittelt, auf welchen Endwert diese Werte konvergieren. Hierbei werden Ausreißer, welche von der Mehrzahl der Werte um einen vorbestimmten Wert abweichen, nicht beachtet. Durch eine solche Berechnung kann der Wert für P und R auf die Dauer noch genauer ermittelt werden. Eine Berechnung der Geschwindigkeit auf Basis dieser Werte ist somit mit einer höheren Genauigkeit möglich.

Die der Erfindung zugrunde liegende Aufgabe wird zusätzlich gelöst durch eine Zweiradgeschwindigkeitsmessvorrichtung zum Durchführen eines solchen Verfahrens. Die Zweiradgeschwindigkeitsmessvorrichtung umfasst dabei einen am Rad montierten Magneten, einen Magnetfeldsensor, zum Ermitteln eines Magnetfeldes des Magneten, und eine Rechnereinheit zum Berechnen der Geschwindigkeit, insbesondere der Geschwindigkeit $v_P$ und/oder Geschwindigkeit $v_R$, und zum Ermitteln des Wertes P und/oder R, insbesondere einen bevorzugt geschwindigkeitsunabhängigen festen Wertes P und/oder R. Eine solche Zweiradgeschwindigkeitsmessvorrichtung weist somit die für jedes Fahrrad üblichen Komponenten auf. Lediglich die Rechnereinheit ist dazu ausgelegt, dass erfindungsgemäße Verfahren durchzuführen. Eine solche Zweiradgeschwindigkeit Messvorrichtung kann somit wirtschaftlich bereitgestellt werden. Zusätzlich weist die Zweiradgeschwindigkeitsmessvorrichtung die zu dem Verfahren angegebenen Vorteile und Eigenschaften auf.

Zusätzlich wird ein Zweirad angegeben, welches eine solche Zweiradgeschwindigkeitsmessvorrichtung aufweist. Mit einem solchen Zweirad werden die zuvor beschriebenen Eigenschaften und Vorteile erzielt.

Ausführungsbeispiele der Erfindung sind in der Zeichnung dargestellt und in der nachfolgenden Beschreibung näher erläutert. Es zeigt:

Figur 1   Darstellung einer Zweiradgeschwindigkeitsmessvorrichtung nach einem Ausführungsbeispiel der Erfindung,

Figur 2   Darstellung eines Magnetfeldes in Abhängigkeit der Zeit mit mehreren Magnetpulsen,

Figur 3   Ausführungsbeispiel eines Verfahrens zum Ermitteln einer Geschwindigkeit eines Zweirads,

Figur 4   Darstellung des Magnetfelds und eines Winkelverlaufs des Magnetfeldsektors in Abhängigkeit von der Zeit,

Figur 5   Verfahrens zum Ermitteln einer Geschwindigkeit nach einem Ausführungsbeispiel der Erfindung, und

Figur 6   Verfahren zum Ermitteln der Geschwindigkeit nach einem Ausführungsbeispiel der Erfindung.

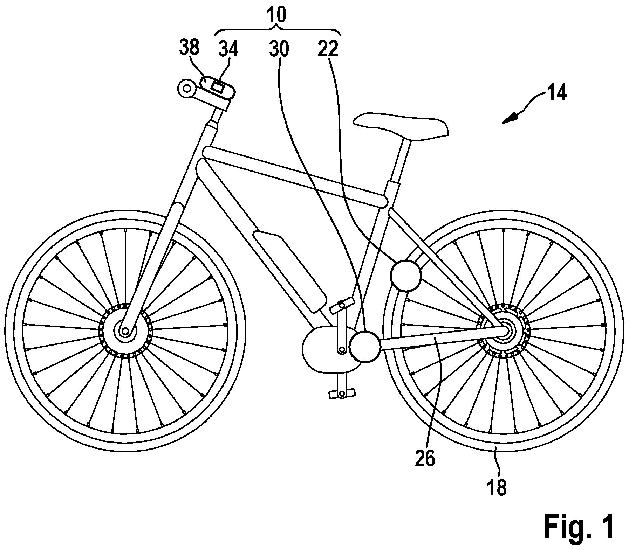

In Figur 1 ist eine Darstellung einer Zweiradgeschwindigkeitsmessvorrichtung 10 nach einem Ausführungsbeispiel der Erfindung gezeigt. In dem hier gezeigten Ausführungsbeispiel ist die Zweiradgeschwindigkeitsmessvorrichtung 10 an einem als Pedelec ausgebildeten Zweirad 14 angeordnet. Die Vorrichtung 10 umfasst dabei einen an einem Rad 18 des Zweirads 14 montierten Magneten 22, welcher sich zusammen mit dem Rad 18 dreht. Zusätzlich ist an einem Rahmen 26 des Pedelecs 14 ein Magnetfeldsensor 30 angeordnet, an welchem der Magnet 22 vorbeiläuft. Über den Magnetfeldsensor 30 ist das durch den Magneten 22 erzeugte Magnetfeld messbar. Das Zweirad 14 weist zusätzlich eine Rechnereinheit 34 auf, welche in dem hier gezeigten Ausführungsbeispiel in einer Anzeigevorrichtung 38 angeordnet ist. Über die Rechnereinheit 34 können dabei die Geschwindigkeit des Zweirads 14 ermittelt und über die Anzeigevorrichtung 38 angezeigt werden.

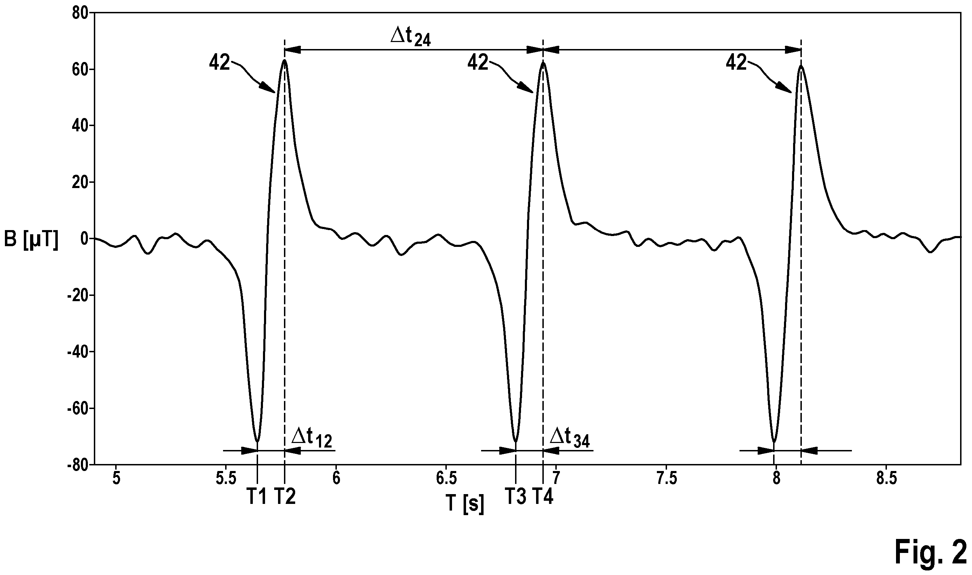

Figur 2 zeigt eine Darstellung eines Magnetfeldes B in Abhängigkeit der Zeit T, in welchem mehrere, durch den Magneten 22 verursachte, Magnetpulse 42 dargestellt sind. Das dargestellte Magnetfeld B ist dabei das, welches von dem Magnetfeldsensor 30 ermittelt wird. In diese Figur ist zu sehen, dass bei einem Passieren des Magneten 22 am Magnetfeldsensor 30 vor dem Zeitpunkt T1, das Magnetfeld B in eine negative Richtung bis zu einem Minimum bei T1 ausschlägt. Anschließend steigt das Magnetfeld B bis zum Zeitpunkt T2 auf ein Maximum an. Nach dem Maximum fällt das Magnetfeld B auf einen neutralen Wert zurück. Der Ausschlag zum Minimum und zum Maximum bildet dabei einen Magnetpuls 42, welcher während eines Passierens des Magneten 22 am Magnetfeldsensor 30 erzeugt wird.

Kurz vor dem Zeitpunkt T3 beginnt ein weiterer Magnetpuls 42. Entsprechend hat das Rad 18 zwischen den Punkten T2 und T4 eine vollständige Umdrehung zurückgelegt. Das Rad 18 braucht somit für eine Umdrehung eine Radumlaufzeit $\Delta t_{24}$. Entsprechend ist eine Geschwindigkeit durch $v(T4) = U \div \Delta t_{24}$ berechenbar, wobei U den Radumfang angibt. Diese Ermittlung entspricht dabei dem Rechenweg, wie üblicherweise die Geschwindigkeit eines Zweirades 14 ermittelt wird, sozusagen die Referenzgeschwindigkeit v oder die Geschwindigkeitsermittlung auf üblichem oder Referenzweg . Erfindungsgemäß soll jedoch die Geschwindigkeit bereits nach einer Zeit $\Delta t_{12}$ ermittelt werden.

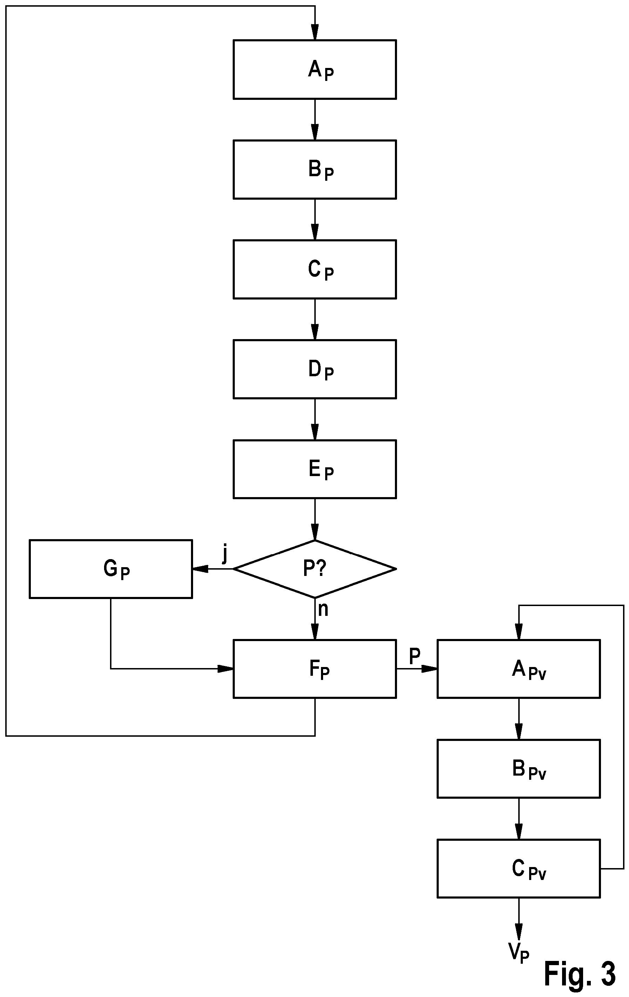

Figur 3 zeigt dabei ein Ausführungsbeispiel eines Verfahrens zum Ermitteln einer Geschwindigkeit des Zweirads 14. Dazu wird in einem ersten Schritt $A_P$, wie in Figur 2 dargestellt, das Magnetfeld B bei wenigstens zwei Magnetpulsen 42 ermittelt. Anschließend wird in einem nächsten Schritt $B_P$ eine Zeit $\Delta t_{34}$ zwischen dem Minimum bei T3 und dem Maximum bei T4 ermittelt. Zusätzlich wird, wie bereits zu Figur 2 beschrieben, die Radumlaufzeit $\Delta t_{24}$ zwischen gleichen Extremwerten von zwei aufeinanderfolgenden Magnetpulse 42 bestimmt $C_P$. In dem hier gezeigten Ausführungsbeispiel sind die Extremwerte die Maxima bei zwei Magnetpulsen 42. Ebenso ist es möglich, jeweils das Minimum zu verwenden. Anschließend wird, wie bereits zu Figur 2 beschrieben, die Geschwindigkeit v(T4), insbesondere Referenzgeschwindigkeit, aus der Radumlaufzeit $\Delta t_{24}$ und dem Radumfang U bestimmt $D_P$.

In einem nächsten Schritt $E_P$ wird ein fester Wert P aus einem Produkt aus Zeit $\Delta t_{34}$ zwischen Minimum und Maximum und der Geschwindigkeit nach der Formel $P = \Delta t_{34} * v(T4)$ berechnet. Der Wert P ist dabei von der Geschwindigkeit unabhängig und konstant. Anschließend wird in Schritt $F_P$ der Wert P in der Rechnereinheit 34 hinterlegt. Falls für den Wert P bereits ein Wert abgelegt sein sollte, kann in einem nächsten Schritt $G_P$ ein Mittelwert zwischen diesen Werten berechnet werden. In diesem Fall wird der berechnete Mittelwert in der Rechnereinheit 34 abgelegt $F_P$.

Mit einem hinterlegten Wert für P ist es nun möglich, für alle folgenden Umläufe des Rades 18, die Geschwindigkeit, insbesondere Geschwindigkeit $v_P$, bereits vor einem vollständigen Umlauf des Rades 18 zu ermitteln. Dazu wird in einem ersten Schritt $A_{Pv}$ das Magnetfeld B eines Magnetpulses 42 ermittelt. Anschließend wird in einem weiteren Schritt $B_{Pv}$ eine Zeit $\Delta t_{12}$ zwischen dem Minimum und dem Maximum eines einzigen Magnetpulses 42 bestimmt. In einem weiteren Schritt $C_{Pv}$ wird die Geschwindigkeit $v_P$ aus einem Quotienten aus dem Wert P und der Zeit $\Delta t_{12}$ zwischen dem Minimum und dem Maximum nach der Formel $v_P(T2) = P \div \Delta t_{12}$ für den Zeitpunkt T2 ermittelt. Über den Wert P und der Zeit $\Delta t_{12}$ zwischen dem Minimum und dem Maximum, ist somit bereits vor Erreichen einer vollständigen Umdrehung die Geschwindigkeit $v_P$ des Rades 18 ermittelbar. Obwohl der Wert für P lediglich einmal bestimmt zu werden braucht, ist auch, wie in Figur 3 gezeigt, eine kontinuierliche Bestimmung des Werts P möglich. Dadurch wird jeweils der aktuelle Wert für P zur Bestimmung der Geschwindigkeit $v_P$ verwendet.

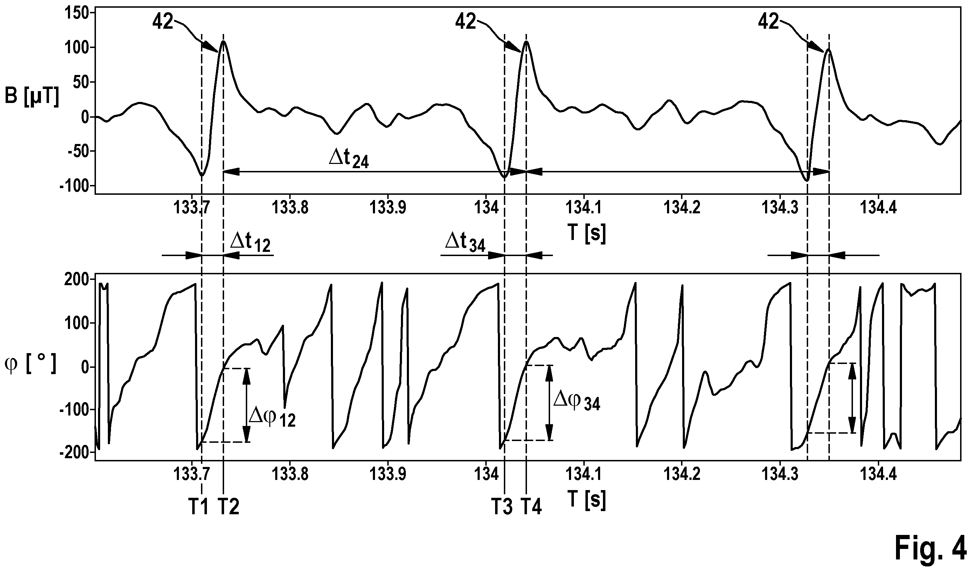

Figur 4 zeigt eine Darstellung des Magnetfelds B und eines Winkelverlaufs $\varphi$ des Magnetfeldvektors in Abhängigkeit von der Zeit T. Das obere Diagramm entspricht dabei im Wesentlichen der bereits in Figur 2 gezeigten Darstellung. Zusätzlich ist jedoch zeitlich korreliert der Winkelverlauf $\varphi$ des Magnetfeldvektors aufgetragen. Entsprechend kann für die Zeit $\Delta t_{12}$, $\Delta t_{34}$ zwischen Minimum und Maximum die entsprechende Winkeldifferenz $\Delta\varphi_{12}$, $\Delta\varphi_{34}$ aus dem Winkelverlauf $\varphi$ des Magnetfeldvektors zwischen diesen Zeitpunkten T1, T2, T3, T4 bestimmt werden.

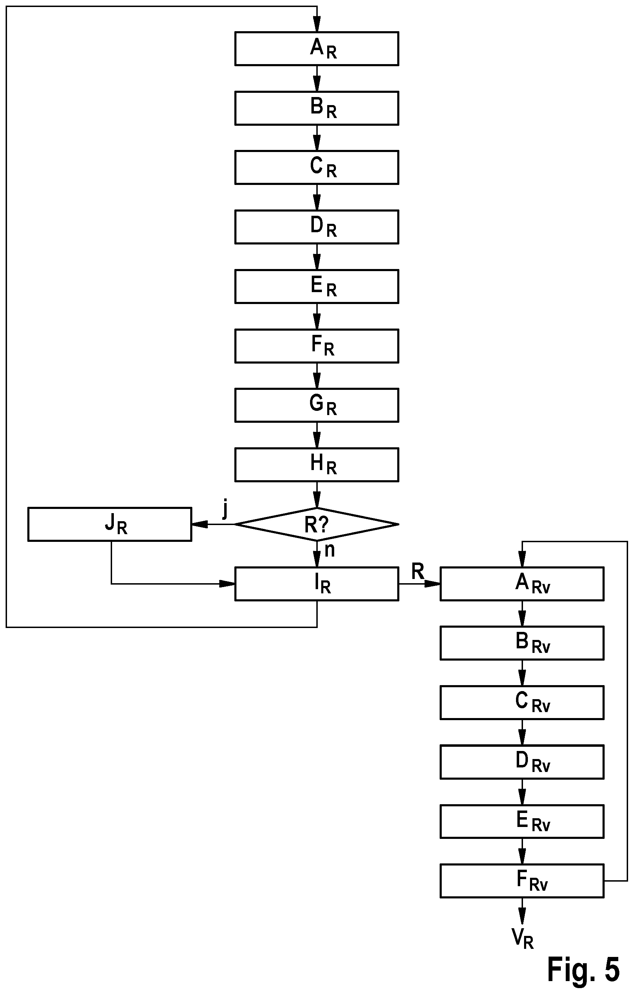

In Figur 5 ist ein Verfahren zum Ermitteln einer Geschwindigkeit, insbesondere Geschwindigkeit $v_R$, nach einem Ausführungsbeispiel der Erfindung gezeigt. In einem ersten Schritt $A_R$ wird das Magnetfeld B bei wenigstens zwei Magnetpulsen 42 ermittelt. Zusätzlich wird in einem weiteren Schritt $B_R$ der Winkelverlauf $\varphi$ des Magnetfeldvektors bestimmt. In einem weiteren Schritt $C_R$ wird eine Zeit $\Delta t_{34}$ zwischen dem Minimum und dem Maximum eines einzigen Magnetpulses 42 bestimmt. Die während dieser Zeit $\Delta t_{34}$ sich ergebende Winkeldifferenz $\Delta\varphi_{34}$ wird, in einem weiteren Schritt $D_R$, aus dem Magnetfeldvektor ermittelt. Aus der Zeit $\Delta t_{34}$ und der Winkeldifferenz $\Delta\varphi_{34}$ wird in einem anschließenden Schritt $E_R$ die Winkelgeschwindigkeit $\omega_{34}$ bestimmt. Zusätzlich wird die Radumlaufzeit $\Delta t_{24}$ zwischen gleichen Extremwerten zweier aufeinanderfolgenden Magnetpulsen 42 gemessen $F_R$. Aus der Radumlaufzeit $\Delta t_{24}$ und dem Radumfang U wird in einem anschließenden Verfahrensschritt $G_R$ die Geschwindigkeit v(T4), insbesondere Referenzgeschwindigkeit, zum Zeitpunkt T4 des Zweirads 14 bestimmt.

Aus der Geschwindigkeit v(T4) des Zweirads 14 und der Winkelgeschwindigkeit $\omega_{34}$ wird in einem weiteren Schritt $H_R$ nach der Formel $R = \dfrac{v(T4)}{\omega_{34}}$ der Wert R bestimmt. Dieser wird in einem darauffolgenden Schritt $I_R$ in der Rechnereinheit 34 hinterlegt. Der Wert R ist dabei von der Geschwindigkeit, insbesondere Geschwindigkeit $v_R$, unabhängig und konstant. Falls für den Wert R bereits ein Wert abgelegt sein sollte, kann in einem nächsten Schritt $J_R$ ein Mittelwert zwischen diesen Werten berechnet werden. In diesem Fall wird der berechnete Mittelwert für R in der Rechnereinheit 34 abgelegt $I_R$.

Mit einem hinterlegten Wert für R ist es nun möglich, für alle folgenden Umläufe des Rades 18, die Geschwindigkeit, insbesondere Geschwindigkeit $v_R$, bereits vor einem vollständigen Umlauf des Rades 18 zu ermitteln. Dazu wird in einem ersten Schritt $A_{Rv}$ das Magnetfeld B eines Magnetpulses 42 ermittelt. Zusätzlich wird der Winkelverlauf $\varphi$ des Magnetfeldvektors eines einzigen Magnetpulses 42 bestimmt $B_{Rv}$. In einem weiteren Schritt $C_{Rv}$ wird die Zeit $\Delta t_{12}$ zwischen dem Minimum und dem Maximum eines Magnetpulses 42 gemessen. Für diese Zeit $\Delta t_{12}$ wird zusätzlich die Winkeldifferenz $\Delta\varphi_{12}$ aus dem Winkelverlauf $\varphi$ des Magnetfeldvektors ermittelt $D_{Rv}$. Aus der Winkeldifferenz $\Delta\varphi_{12}$ und der Zeit $\Delta t_{12}$ wird anschließend die Winkelgeschwindigkeit $\omega_{12}$ berechnet $E_{Rv}$. In einem anschließenden Schritt $F_{Rv}$ wird die Geschwindigkeit, insbesondere Geschwindigkeit $v_R$, des Zweirads 14 aus einem Produkt des hinterlegten Werts R und der Winkelgeschwindigkeit $\omega_{12}$ nach der Formel $v_R(T2) = R * \omega_{12}$ für den Zeitpunkt T2 berechnet. Über den Wert R und der Zeit $\Delta t_{12}$ zwischen

dem Minimum und dem Maximum ist somit bereits vor Erreichen einer vollständigen Umdrehung die Geschwindigkeit, insbesondere Geschwindigkeit $v_R$, des Rades 18 ermittelbar. Obwohl der Wert für R lediglich einmal bestimmt zu werden braucht, ist auch eine kontinuierliche Bestimmung des Werts R möglich.

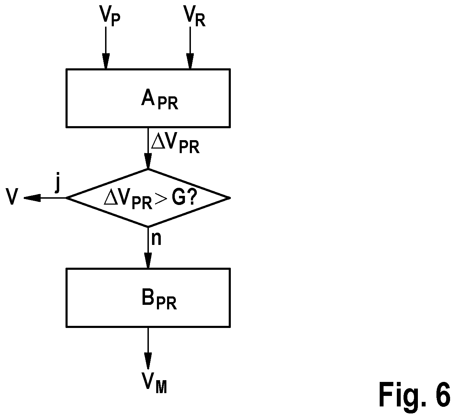

Figur 6 zeigt ein Verfahren zum Ermitteln der Geschwindigkeit, insbesondere Geschwindigkeitsmittelwert $v_M$, nach einem Ausführungsbeispiel der Erfindung. Dieses Verfahren knüpft an das Verfahren nach den Figuren 3 und 5 an. In einem ersten Verfahrensschritt $A_{PR}$ werden dabei die über die Figuren 3 und 5 ermittelten Geschwindigkeiten $v_P$, $v_R$ miteinander verglichen. Dabei wird eine Abweichung $\Delta v_{PR}$ zwischen den Geschwindigkeiten $v_P$, $v_R$ berechnet. Anschließend wird ermittelt, ob die Abweichung $\Delta v_{PR}$ einen Grenzwert G überschreitet. Falls die Abweichung unterhalb des Grenzwerts G sein sollte, wird in einem anschließenden Schritt $B_{PR}$ ein Mittelwert, insbesondere Geschwindigkeitsmittelwert $v_M$ zwischen den beiden Geschwindigkeiten $v_P$, $v_R$ berechnet. Dieser Geschwindigkeitsmittelwert $v_M$ ist dabei die Geschwindigkeit, welche dem Fahrer des Zweirads 14 angezeigt wird.

Für den Fall, dass die Abweichung $\Delta v_{PR}$ den Grenzwert G übersteigen sollte, wird die Geschwindigkeit v(T4), insbesondere Referenzgeschwindigkeit, auf Basis des Radumfangs U und der Radumlaufzeit $\Delta t_{24}$, berechnet und dem Fahrer des Zweirads 14 angezeigt. Dadurch wird verhindert, dass eine fehlerhafte Geschwindigkeit dem Fahrer ausgegeben wird.

## Patentansprüche

1. Verfahren zum Ermitteln einer Geschwindigkeit $v_P$ eines Zweirads (14) mittels einer Zweiradgeschwindigkeitsmessvorrichtung (10), umfassend einen am Rad (18) montierten Magneten (22), einen Magnetfeldsensor (30) zum Ermitteln eines Magnetfeldes (B) des Magneten (22) und eine Rechnereinheit (34), wobei das Verfahren die Schritte umfasst:

   - Ermitteln ($A_{Pv}$) des Magnetfeldes (B) eines Magnetpulses (42),
   - Ermitteln ($B_{Pv}$) einer Zeit ($\Delta t_{12}$, $\Delta t_{34}$) zwischen einem Minimum und einem Maximum eines einzigen Magnetpulses (42), und
   - Berechnen ($C_{Pv}$) der Geschwindigkeit $v_P$ aus einem Quotienten aus einem ermittelten und in der Zweiradgeschwindigkeitsmessvorrichtung (10) hinterlegten Wert P und der Zeit ($\Delta t_{12}$, $\Delta t_{34}$) zwischen Minimum und Maximum, wobei eine Ermittlung von P folgende Schritte umfasst:

      - Ermitteln ($A_P$) des Magnetfeldes (B) bei wenigstens zwei Magnetpulsen (42),
      - Ermitteln ($B_P$) der Zeit ($\Delta t_{12}$, $\Delta t_{34}$) zwischen einem Minimum und einem Maximum eines einzigen Magnetpulses (42),
      - Ermitteln ($C_P$) der Radumlaufzeit ($\Delta t_{24}$) zwischen gleichen Werten zweier aufeinander folgenden Magnetpulse (42),
      - Ermitteln ($D_P$) einer Geschwindigkeit v, insbesondere Referenzgeschwindigkeit, aus der Radumlaufzeit ($\Delta t_{24}$) und einem Radumfang (U),
      - Berechnen ($E_P$)eines Werts für P, aus einem Produkt aus Zeit ($\Delta t_{12}$, $\Delta t_{34}$) zwischen Minimum und Maximum und der Geschwindigkeit v, und
      - Hinterlegen ($F_P$) des Werts P.

2. Verfahren zum Ermitteln einer Geschwindigkeit $v_R$ eines Zweirads (14) mittels einer Zweiradgeschwindigkeitsmessvorrichtung (10), umfassend einen am Rad (18) montierten Magneten (22), einen Magnetfeldsensor (30) zum Ermitteln eines Magnetfeldes (B) des Magneten (22) und eine Rechnereinheit (34), wobei das Verfahren die Schritte umfasst:

   - Ermitteln ($A_{Rv}$) des Magnetfeldes (B) eines Magnetpulses (42),
   - Ermitteln ($B_{Rv}$) des Winkelverlaufs ($\varphi$) des Magnetfeldvektors eines einzigen Magnetpulses (42),
   - Ermitteln ($C_{Rv}$) der Zeit ($\Delta t_{12}$, $\Delta t_{34}$) zwischen einem Minimum und einem Maximum eines Magnetpulses (42),
   - Ermitteln ($D_{Rv}$) der Winkeldifferenz ($\Delta\varphi_{12}$, $\Delta\varphi_{34}$) aus dem Winkelverlauf ($\varphi$) des Magnetfeldvektors zum Zeitpunkt (T1, T2) des Minimums und des Maximums des Magnetpulses (42),
   - Berechnen ($E_{Rv}$) einer Winkelgeschwindigkeit ($\omega_{12}$) aus Winkeldifferenz ($\Delta\varphi_{12}$) und Zeit ($\Delta t_{12}$),
   - Berechnen ($F_{Rv}$) einer Geschwindigkeit $v_R$ aus einem Produkt einem in der Zweiradgeschwindigkeitsmessvorrichtung (10) ermittelten und hinterlegten Wert R und der Winkelgeschwindigkeit ($\omega_{12}$), wobei eine Ermittlung von R folgende Schritte umfasst:

      - Ermitteln ($A_R$) des Magnetfeldes (B) bei wenigstens zwei Magnetpulsen (42),
      - Ermitteln ($B_R$) des Winkelverlaufs ($\varphi$) des Magnetfeldvektors,
      - Ermitteln ($C_R$) der Zeit ($\Delta t_{12}$, $\Delta t_{34}$) zwischen einem Minimum und einem Maximum eines einzigen Magnetpulses (42),
      - Ermitteln ($D_R$) der Winkeldifferenz ($\Delta\varphi_{12}$, $\Delta\varphi_{34}$) aus dem Winkelverlauf ($\varphi$) des Magnetfeldvektors zum Zeitpunkt (T1, T2) des Minimums und des Maximums des Magnetpulses (42),
      - Berechnen ($E_R$) einer Winkelgeschwindigkeit ($\omega_{12}$) aus der Winkeldifferenz ($\Delta\varphi_{12}$)

und der Zeit ($\Delta t_{12}$) zwischen einem Minimum und einem Maximum eines einzigen Magnetpulses (42),

- Ermitteln ($F_R$) der Radumlaufzeit ($\Delta t_{24}$) zwischen gleichen Werten zweier aufeinander folgenden Magnetpulse (42),

- Ermitteln ($G_R$) einer Geschwindigkeit v, insbesondere Referenzgeschwindigkeit, aus der Radumlaufzeit ($\Delta t_{24}$) und einem Radumfang (U),

- Berechnen ($H_R$) eines Werts R aus einem Quotienten aus der Geschwindigkeit v und Winkelgeschwindigkeit ($\omega_{12}$), und

- Hinterlegen ($I_R$) des Werts R.

3. Verfahren zum Ermitteln einer Geschwindigkeit $v_P$, $v_R$ eines Zweirads (14), wobei die Geschwindigkeit $v_P$, $v_R$ sowohl über das Verfahren nach Anspruch 1 als auch das Verfahren nach Anspruch 2 ermittelt wird.

4. Verfahren zumindest nach einem der vorherigen Ansprüche, **dadurch gekennzeichnet, dass** der Wert P und/oder R bei einer konstanten Geschwindigkeit v berechnet wird.

5. Verfahren zumindest nach Anspruch 1 und 2, insbesondere nach Anspruch 3-4, **dadurch gekennzeichnet, dass** die über den Wert P und den Wert R ermittelten Geschwindigkeiten $v_P$, $v_R$ miteinander verglichen ($A_{PR}$) werden, und falls die Geschwindigkeiten $v_P$, $v_R$ um einen vorgegebenen Grenzwert (G) voneinander abweichen, die Geschwindigkeit v aus der Radumlaufzeit ($\Delta t_{24}$) und dem Radumfang (U) berechnet wird.

6. Verfahren zumindest nach Anspruch 1 und 2, insbesondere nach Anspruch 3-5, **dadurch gekennzeichnet, dass** ein Mittelwert $v_M$ zwischen den über den Wert P und den Wert R ermittelten Geschwindigkeiten $v_P$, $v_R$ ermittelt ($B_{PR}$) wird.

7. Verfahren zumindest nach einem der vorherigen Ansprüche, **dadurch gekennzeichnet, dass** der/die ermittelte(n) Wert(e) für P und/oder R kontinuierlich ermittelt und neu hinterlegt wird/werden.

8. Verfahren nach einem der vorherigen Ansprüche, **dadurch gekennzeichnet, dass** für den Wert P und/oder R ermittelt wird, auf welchen Endwert diese Werte konvergieren, insbesondere wobei Ausreißer, welche von der Mehrzahl der Werte P und/oder R um einen vorbestimmten Wert abweichen, nicht beachtet werden.

9. Zweiradgeschwindigkeitsmessvorrichtung (10) zum Durchführen eines Verfahrens nach einem der vorherigen Ansprüche, umfassend:

- einen am Rad (18) montierten Magneten (22),
- einen Magnetfeldsensor (30), zum Ermitteln eines Magnetfeldes (B) des Magneten (22), und
- eine Rechnereinheit (34) zum Berechnen der Geschwindigkeit $v_P$, $v_R$ und zum Ermitteln des insbesondere festen Wertes P und/oder R.

10. Zweirad umfassend eine Zweiradgeschwindigkeitsmessvorrichtung (10) nach Anspruch 8.

Fig. 1

Fig. 2

Fig. 3

Fig. 4

EP 4 610 663 A1

Fig. 5

$V_P$    $V_R$

$$A_{PR}$$

$\Delta V_{PR}$

$V \xleftarrow{\text{j}} \Delta V_{PR} > G?$

n

$$B_{PR}$$

$V_M$

Fig. 6

Europäisches
Patentamt

European
Patent Office

Office européen
des brevets

# EUROPÄISCHER RECHERCHENBERICHT

**Nummer der Anmeldung**

EP 25 15 8447

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 200199 A1 (BOSCH GMBH ROBERT [DE]) 14. Juli 2022 (2022-07-14) | 1,4,7,9, 10 | INV. G01P3/487 |
| A | * Absätze [0002], [0016], [0017], [0031], [0032] * | 2,3,5,6, 8 | G01P21/02 |
| | - - - - - | | |
| A | EP 3 435 094 A2 (BOSCH GMBH ROBERT [DE]) 30. Januar 2019 (2019-01-30) * das ganze Dokument * | 1-10 | |
| | - - - - - | | |
| A | WO 2023/021130 A1 (BOSCH GMBH ROBERT [DE]) 23. Februar 2023 (2023-02-23) * das ganze Dokument * | 1-10 | |
| | - - - - - | | |

**RECHERCHIERTE SACHGEBIETE (IPC)**

G01P

Der vorliegende Recherchenbericht wurde für alle Patentansprüche erstellt

| Recherchenort | Abschlußdatum der Recherche | Prüfer |
|---|---|---|
| München | 4. Juli 2025 | Schwarz, Cornelia |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 25 15 8447

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-07-2025

| Im Recherchenbericht angeführtes Patentdokument | Datum der Veröffentlichung | Mitglied(er) der Patentfamilie | Datum der Veröffentlichung |
|---|---|---|---|
| DE 102021200199 A1 | 14-07-2022 | DE 102021200199 A1<br>EP 4278192 A1<br>WO 2022152480 A1 | 14-07-2022<br>22-11-2023<br>21-07-2022 |
| EP 3435094 A2 | 30-01-2019 | DE 102017212924 A1<br>EP 3435094 A2 | 31-01-2019<br>30-01-2019 |
| WO 2023021130 A1 | 23-02-2023 | EP 4388323 A1<br>WO 2023021130 A1 | 26-06-2024<br>23-02-2023 |

EPO FORM P0461

Für nähere Einzelheiten zu diesem Anhang : siehe Amtsblatt des Europäischen Patentamts, Nr.12/82

IN DER BESCHREIBUNG AUFGEFÜHRTE DOKUMENTE

**In der Beschreibung aufgeführte Patentdokumente**

- DE 102017212924 A1